# EUROPÄISCHE PATENTSCHRIFT

(11) **EP 3 862 712 B1**
(45) Veröffentlichungstag und Bekanntmachung des Hinweises auf die Patenterteilung: **26.06.2024**
(21) Anmeldenummer: 21155381.3
(22) Anmeldetag: 05.02.2021
(51) Int. Cl.: F28D 20/00

(54) **VERFAHREN UND VORRICHTUNG ZUR BEREITSTELLUNG UND SPEICHERUNG EINES WÄRMETRÄGERS MIT WENIGSTENS DREI TEMPERATURNIVEAUS FÜR EIN WÄRMENETZ**
METHOD AND DEVICE FOR PROVIDING AND STORING A HEAT CARRIER WITH AT LEAST THREE TEMPERATURE LEVELS FOR A HEATING NETWORK
PROCÉDÉ ET DISPOSITIF DE FOURNITURE ET D'ACCUMULATION D'UN CALOPORTEUR COMPORTANT AU MOINS TROIS NIVEAUX DE TEMPÉRATURE POUR UN RÉSEAU DE CHAUFFAGE URBAIN

(30) Priorität: 06.02.2020 DE 102020103082
(43) Veröffentlichungstag der Anmeldung: 11.08.2021
(73) Patentinhaber: Wolfgang Jaske und Dr. Peter Wolf GbR, 49811 Lingen (DE)
(72) Erfinder: JASKE, Wolfgang, 49811 Lingen (DE); WOLF, Peter, 26209 Hatten (DE)
(74) Vertreter: Jabbusch, Matthias

(56) Entgegenhaltungen:
- WO-A1-2008/130306
- AT-A1- 507 710
- DE-A1- 10 065 216
- DE-A1-102007 050 674
- DE-A1-102008 049 954
- DE-U1-202013 008 465
- IT-A1- MI20 100 458

## Beschreibung

Die Erfindung betrifft ein Verfahren und eine Vorrichtung zur Bereitstellung und Speicherung eines Wärmeträgers mit wenigstens drei Temperaturniveaus für ein Wärmenetz, bei dem wenigstens ein Wärmespeicher als Arbeitsspeicher wärmeträgerleitend mit Wärmenetzleitungen des Wärmenetzes verbunden ist und eine Speicherung von Wärmeträger auf den jeweiligen Temperaturniveaus des Wärmenetzes ermöglicht, wobei Wärmeträger zwischen wenigstens einer Wärmepumpe und wenigstens dem einen Wärmespeicher zirkuliert.

Über Wärmenetze kann Energie aus niedertemperierten und insbesondere regenerativen Wärmequellen genutzt werden, um beispielsweise in Gebäuden, Haushalten oder Gewerbebetrieben Heizwärme oder Warmwasser bereitzustellen. Mögliche Wärmequellen können dabei Gewässer, Grundwasser, Luft, Abwärme aus Betriebsstätten oder Kläranlagen sein. Um Wärmeverluste in einem Wärmenetz einerseits zu minimieren und andererseits Kosten und Aufwand bei der Bereitstellung der Wärme für das Wärmenetz zu verringern, kann dieses mit Vorteil auf einem niederen Temperaturniveau betrieben werden.

Damit bei einem Wärmenetz auch auf einem niedrigen Temperaturniveau immer Wärmeträger auf einem benötigten Temperaturniveau zur Verfügung steht, weisen Wärmenetze zumeist Wärmespeicher, insbesondere zur Pufferung, auf. Ein solches Wärmenetz ist unter anderem aus der DE 20 2011 106 855 U1 bekannt. Bei der DE 20 2011 106 855 U1 ist zwischen einem oder mehreren regenerativen Energieerzeugern, beispielsweise einer Erdwärmesonde und einem Solarkollektor, einerseits und mehreren Haushalten als Verbraucher andererseits ein Pufferspeicher vorgesehen. An diesen Pufferspeicher, der in verschiedenen Schichten Wärmeträger auf unterschiedlichen Temperaturniveaus vorhält, sind dann Wärmenetzleitungen auf dem jeweiligen Temperaturniveau angeschlossen.

Die WO 2008/130306 A1 zeigt eine Vorrichtung, bei der Wärmenetze auf unterschiedlichen Temperaturniveaus wärmeträgerleitend an einen Wärmespeicher angeschlossen sind. Eines dieser Wärmenetze für die Beheizung z. B. eines Gebäudes führt den Wärmeträger über einen Kondensator einer Wärmepumpe, wobei der Wärmeträger auf ein höheres Temperatur gebracht wird bevor er in dem Gebäude genutzt wird. Verdampferseitig wirkt die Wärmepumpe mit einem oder mehreren Wärmeerzeugern zusammen, wobei ein zwischen den Wärmeträgern und einem in den Wärmespeicher integrierten Wärmeübertrager zirkulierender Wärmeträger zur Erhöhung der Temperaturdifferenz abgekühlt wird. Alle Wärmeträgerkreisläufe sind dabei hydraulisch voneinander getrennt.

AT 507 710 A1 offenbart ein Verfahren gemäß dem Oberbegriff von Anspruch 1 und zeigt verschiedene, hydraulisch voneinander getrennte Wärmeträgerkreisläufe die zu einem System verbunden werden.

Dieses System umfasst einen geschichteten Wärmespeicher zur Bereitstellung mehrerer Temperaturniveaus, der einerseits über einen Wärmeübertrager mit wenigstens zwei Wärmeerzeugern und der andererseits über angebundene Leitungen mit einem Verbraucher gekoppelt ist. Der verbraucherseitige Wärmeträgerkreislauf und ein einem der Wärmeerzeuger zugeordneter Wärmeträgerkreislauf sind darüber hinaus über eine Wärmepumpe miteinander verbunden.

Die IT MI20 100 458 A1 offenbart ebenso eine Vorrichtung zur Bereitstellung von Wärmträger auf unterschiedlichen Temperaturniveaus, z. B. für eine Gebäudeheizung und für eine Warmwasserbereitstellung. Wie bei den vorangegangenen WO 2008/130306 A1 und AT 507 710 A1 sind die einzelnen Wärmeträgerkreisläufe dabei hydraulisch vollständig voneinander getrennt. Eine Wärmeübertragung erfolgt lediglich zwischen dem Wärmeträgerkreislauf einer niedertemperierten Wärmequelle und dem Wärmeträgerkreislauf einer höhertemperierten Wärmequelle sowie mittels Wärmepumpe zwischen dem Wärmeträgerkreislauf der niedertemperierten Wärmequelle und einem verbraucherseitigen Wärmeträgerkreislauf.

Ausgehend von einem solchen Wärmenetz mit einem Pufferspeicher liegt die Aufgabe der Erfindung darin, einen Wärmeträger für ein Wärmenetz auf den verschiedenen Temperaturniveaus besonders effizient und unter Einsatz von möglichst wenig Energie bereitstellen zu können.

Die Lösung dieser Aufgabe erfolgt verfahrensmäßig mit den Merkmalen des Anspruchs 1 und vorrichtungsmäßig mit den Merkmalen des Anspruchs 7. Weiterbildungen und vorteilhafte Ausgestaltungen sind in den jeweils nachgeordneten Ansprüchen angegeben.

Das Verfahren zur Bereitstellung und Speicherung eines Wärmeträgers mit wenigstens drei Temperaturniveaus für ein Wärmenetz, bei dem wenigstens ein Wärmespeicher als Arbeitsspeicher wärmeträgerleitend mit Wärmenetzleitungen des Wärmenetzes verbunden ist und eine Speicherung von Wärmeträger auf den jeweiligen Temperaturniveaus des Wärmenetzes ermöglicht, wobei Wärmeträger zwischen wenigstens einer Wärmepumpe und wenigstens dem einen Wärmespeicher zirkuliert, zeichnet sich erfindungsgemäß dadurch aus, dass der Wärmeträger über einen Kondensator sowie einen Verdampfer der Wärmepumpe geleitet wird, dass dem Verdampfer Wärmeträger aus dem Wärmespeicher, der einen Arbeitsspeicher bildet, auf einem unteren Temperaturniveau des Wärmespeichers zugeleitet wird, dass dem Wärmeträger im Verdampfer Wärme entzogen wird, dass den Verdampfer verlassender Wärmeträger über eine von dem Verdampfer abgehende Wärmeübertragerzuleitung zu einem Wärmeübertrager gelangt, dass der Wärmeträger von dem Wärmeübertrager über eine Wärmeträgerleitung zu einem Mischer gelangt, von dem der Wärmeträger in eine Speicherzuleitung oder in eine Kondensatorzuleitung oder in die Speicherzuleitung und in die Kondensatorzuleitung gelangt, dass der Wärmeträger aus der Speicherzuleitung einem Abschnitt des Wärmespeichers für Wärmeträger auf mittlerem Temperaturniveau zugeführt wird und dass dem Wärmeträger im Kondensator die Wärme zugeführt wird, die dem Wärmeträger im Verdampfer entzogen wurde, wobei den Kondensator verlassender Wärmeträger eine Temperatur aufweist, die gleich oder höher als ein oberes Temperaturniveau im Wärmespeicher, der einen Arbeitsspeicher bildet, ist.

Indem der Wärmeträger sowohl über den Kondensator als auch über den Verdampfer der Wärmepumpe geleitet wird, ist ein besonders effizientes Wärmemanagement möglich. Durch eine gezielte Lenkung des jeweiligen Wärmeträgers zwischen der Wärmepumpe und dem Wärmespeicher wird dabei sichergestellt, dass der Wärmespeicher für das Wärmenetz Wärmeträger auf den jeweils benötigten Temperaturniveaus vorhält. In Abhängigkeit davon, ob Wärmeträger in dem Wärmenetz auf einem unteren, mittleren oder oberen Temperaturniveau benötigt wird, wird der Wärmeträger dann gemäß unterschiedlicher Betriebsmodi zwischen der Wärmepumpe und dem Wärmespeicher gelenkt. Über die Wärmepumpe kann dabei auch aus einer niedertemperierten Wärmequelle Wärmeträger auf einem oberen Temperaturniveau des Wärmenetzes bereitgestellt werden. Die Temperatur des Wärmenetzes kann unter Umständen so hoch werden, dass Wärmepumpen bei einem an das Wärmenetz angeschlossenen Verbraucher nicht genutzt werden müssen.

Das obere, mittlere und untere Temperaturniveau eines angeschlossenen Wärmenetzes entspricht unter normalen Betriebsbedingungen dem oberen, mittleren und unteren Temperaturniveau des den Arbeitsspeicher bildenden Wärmespeichers. Das obere Temperaturniveau entspricht damit einem höchsten Temperaturniveau des Wärmeträgers im Arbeitsspeicher und das untere Temperaturniveau einem niedrigsten Temperaturniveau des Wärmeträgers im Arbeitsspeicher. In einer beispielhaften Betriebsweise kann das obere Temperaturniveau des Wärmeträgers ca. 30°C betragen, das mittlere Temperaturniveau kann ca. 15°C betragen, das untere Temperaturniveau kann ca. 10°C betragen.

Um in dem Wärmespeicher ausreichend Wärmeträger auf oberem oder mittlerem Temperaturniveau des den Arbeitsspeicher bildenden Wärmespeichers, auch bei Entnahme des Wärmeträgers auf dem oberen oder mittleren Temperaturniveau durch das Wärmenetz, vorhalten zu können, wird wenigstens eine Wärmequelle benötigt. Nach einer Weiterbildung wird daher wenigstens ein Teilstrom des Wärmeträgers, bevorzugt der Gesamtstrom des Wärmeträgers, stromab des Verdampfers über wenigstens einen Wärmeübertrager geleitet, wobei in dem Wärmeübertrager in Abhängigkeit von einem jeweiligen Betriebsmodus Wärme einer Wärmequelle, insbesondere einer niedertemperierten Wärmequelle, auf den Wärmeträger übertragen wird. Eine solche, niedertemperierte Wärmequelle kann beispielsweise Grundwasser oder Oberflächenwasser sein, welche immer verfügbar ist. Indem dem Verdampfer Wärmeträger auf einem unteren Temperaturniveau des Wärmespeichers, der einen Arbeitsspeicher bildet, zugeführt und diesem Wärmeträger in dem Verdampfer nochmals Wärme entzogen wird, gelangt der Wärmeträger oder der Teilstrom des Wärmeträgers aus dem Verdampfer mit einer Temperatur unterhalb des unteren Temperaturniveaus des den Arbeitsspeicher bildenden Wärmespeichers, zu dem Wärmeübertrager. Der dem Wärmeübertrager zugeleitete Wärmeträger weist dementsprechend eine möglichst große Temperaturdifferenz zu der Wärmequelle auf, wodurch ein besonders hoher Wärmeübergang von der Wärmequelle auf den Wärmeträger gegeben ist.

Der den Wärmeübertrager verlassende Wärmeträger wird dann gemäß einem ersten Betriebsmodus vorteilhafterweise in zwei Teilströme aufgeteilt, von denen ein erster Teilstrom, insbesondere auf einem mittleren Temperaturniveau, das heißt einem Temperaturniveau zwischen dem oberen Temperaturniveau und dem unteren Temperaturniveau des Arbeitsspeichers, direkt in den Wärmespeicher eingeleitet wird und ein zweiter Teilstrom dem Kondensator zugeführt wird. Der in den Kondensator geleitete Teilstrom nimmt dann die Wärme auf, die dem Wärmeträger zuvor im Verdampfer entzogen wurde. Durch eine geeignete Steuerung der Teilströme, kann der Wärmeträger im Kondensator auf ein Temperaturniveau erwärmt werden, das gleich oder höher als das obere Temperaturniveau im Wärmespeicher, der einen Arbeitsspeicher bildet, ist, da die zuvor im Verdampfer entzogene Wärme auf eine geringere Menge Wärmeträger übertragen wird. Die Steuerung kann beispielsweise durch eine Beeinflussung der jeweiligen Durchflussmengen erfolgen.

Der den Kondensator verlassende Wärmeträger wird dann vorteilhafterweise dem Wärmespeicher, insbesondere dem den Arbeitsspeicher bildenden Wärmespeicher, auf dem oberen Temperaturniveau dieses Wärmespeichers zugeleitet. Der dem Wärmespeicher auf dem oberen Temperaturniveau dieses Wärmespeichers zugeleitete Wärmeträger gleicht dann aus dem Wärmespeicher, der den Arbeitsspeicher bildet, ins Wärmenetz abfließenden Wärmeträger mit oberem Temperaturniveau aus.

Da dem Wärmespeicher gemäß dem ersten Betriebsmodus neben dem Wärmeträger auf dem mindestens oberen Temperaturniveau des Wärmespeichers auch Wärmeträger auf einem mittleren Temperaturniveau des Wärmespeichers zugeleitet wird, kann gleichzeitig auch aus dem Wärmespeicher ins Wärmenetz abfließender Wärmeträger mit mittlerem Temperaturniveau in dem Wärmespeicher ausgeglichen werden. Dem den Arbeitsspeicher bildenden Wärmespeicher kann gemäß dem ersten Betriebsmodus daher für das Wärmenetz gleichzeitig Wärmeträger auf mittlerem Temperaturniveau des Wärmespeichers und auf oberem Temperaturniveau des Wärmespeichersentnommen werden.

Nach einer Weiterbildung kann den Wärmeübertrager verlassender Wärmeträger oder den Verdampfer verlassender Wärmeträger gemäß einem zweiten Betriebsmodus dem Wärmespeicher, insbesondere dem Arbeitsspeicher, vollständig, insbesondere auf einem mittleren Temperaturniveau, zugeführt werden, während Wärmeträger auf dem oberen Temperaturniveau des Wärmespeichers, der einen Arbeitsspeicher bildet, aus dem Wärmespeicher entnommen und dem Kondensator zugeleitet wird. Der zweite Betriebsmodus dient entgegen dem ersten Betriebsmodus nicht der Bereitstellung von Wärmeträger auf einem mittleren oder dem oberen Temperaturniveau des den Arbeitsspeicher bildenden Wärmespeichers sondern der Bereitstellung von Wärmeträger auf einem unteren Temperaturniveau des Wärmespeichers, der einen Arbeitsspeicher bildet. Dieser kann im Wärmenetz zum Kühlen verwendet werden. Bei diesem zweiten Betriebsmodus ist der Wärmeübertrager dann von der Wärmequelle, insbesondere der niedertemperierten Wärmequelle, abgekoppelt oder der den Verdampfer verlassende Wärmeträger wird mittels eines Bypasses an dem Wärmeübertrager vorbei geleitet, so dass der in dem Verdampfer heruntergekühlte Wärmeträger keine weitere Wärme durch die Wärmequelle aufnimmt. Der in dem Verdampfer heruntergekühlte Wärmeträger wird somit direkt in den Wärmespeicher eingeleitet, um aus dem Wärmespeicher in Richtung des Wärmenetzes abfließenden Wärmeträger mit dem unteren Temperaturniveau des Wärmespeichers in diesem auszugleichen.

Da gemäß dem zweiten Betriebsmodus die im Verdampfer entzogene Wärme über die Wärmepumpe auf aus dem Wärmespeicher entnommenen Wärmeträger mit dem oberen Temperaturniveau des den Arbeitsspeicher bildenden Wärmespeichers übertragen wird, weist der den Kondensator verlassende Wärmeträger eine Temperatur auf, die oberhalb des oberen Temperaturniveaus des Wärmespeichers, der den Arbeitsspeicher bildet, liegt. Der den Kondensator verlassende Wärmeträger wird daher gemäß einer Weiterbildung einem weiteren Wärmespeicher, der einen Zusatzspeicher bildet, zugeleitet. In dem Wärmespeicher, der den Arbeitsspeicher bildet, ist somit auch gemäß dem zweiten Betriebsmodus, bei dem aus dem Wärmenetz Wärmeträger auf oberem und mittlerem Temperaturniveau in diesen Wärmespeicher strömt, gewährleistet, dass der Arbeitsspeicher die Temperaturniveaus des Wärmenetzes aufweist.

Dem Zusatzspeicher wird dann Wärmeträger auf einem höheren Temperaturniveau als dem oberen Temperaturniveau des Arbeitsspeichers zugeführt. Der Zusatzspeicher kann somit ein insgesamt höchstes Temperaturniveau des Wärmeträgers aufweisen, insbesondere weist der Zusatzspeier das höchste Temperaturniveau des gesamten Systems auf.

Um Füllstände der Wärmespeicher untereinander ausgleichen zu können, wenn über den Kondensator aus dem Arbeitsspeicher Wärmeträger in den Zusatzspeicher strömt, ist weiterhin vorgesehen, dass die Wärmespeicher auf einem in den Wärmespeichern jeweils unteren Temperaturniveau miteinander wärmeträgerleitend kommunizieren. Der mit dem Wärmenetz verbundene Arbeitsspeicher ist somit unabhängig vom jeweiligen Betriebsmodus mit Wärmeträger auf den verschiedenen Temperaturniveaus gefüllt, um die Wärmeträger auf den jeweiligen Temperaturniveaus in dem Wärmenetz bereitzustellen. Indem die Wärmespeicher auf einem jeweils unteren Temperaturniveau miteinander kommunizieren, ist zudem erreicht, dass aus dem Zusatzspeicher nicht erwärmter Wärmeträger in den Arbeitsspeicher einströmt und dessen Temperaturniveaus stabilisiert.

Gemäß einem dritten Betriebsmodus besteht auch die Möglichkeit mit der Wärmequelle zu kühlen, sofern das untere Temperaturniveau des Wärmespeichers, insbesondere des Arbeitsspeichers, eine höhere Temperatur als die Wärmequelle aufweist. Der Wärmeträger wird dann aus dem Arbeitsspeicher über die Verdampferzuleitung dem Wärmeüberträger der Wärmequelle zugeleitet und gekühlt von dem Wärmeüberträger zurück in den Arbeitsspeicher geleitet.

Aus dem Wärmenetz selbst, das mit dem den Arbeitsspeicher bildenden Wärmespeicher wärmeträgerleitend verbunden ist, werden zu einem beliebigen Zeitpunkt immer gleiche Mengen Wärmeträger entnommen und zugeführt. Das Wärmenetz hat somit keinen Einfluss auf den Füllstand in dem Wärmespeicher, insbesondere den Füllstand in dem Arbeitsspeicher.

Um mehr Wärmeträger auf dem oberen oder einem mittleren Temperaturniveau des Wärmenetzes über den Wärmespeicher bereitstellen zu können, kann dem Wärmespeicher, der den Arbeitsspeicher bildet, aus wenigstens einer weiteren Wärmequelle Wärme zugeführt werden, insbesondere Wärmeträger auf dem oberen Temperaturniveau des Wärmenetzes zugeführt werden. In weiterer Ausgestaltung zirkuliert der Wärmeträger dann zwischen einem Wärmeübertrager der weiteren Wärmequelle und dem Arbeitsspeicher. Eine solche Wärmequelle kann auch an die Wärmenetzleitungen eines Wärmenetzes angeschlossen sein, wobei der Wärmeträger dann über die Wärmenetzleitungen mit entsprechendem Temperaturniveau zwischen dem Arbeitsspeicher und der weiteren Wärmequelle zirkuliert.

Weiter betrifft die Erfindung auch eine Vorrichtung zur Bereitstellung von Wärmeträger auf wenigstens drei Temperaturniveaus für ein Wärmenetz aufweisend wenigstens einen Wärmespeicher, wobei wenigstens ein Wärmespeicher als Arbeitsspeicher Abschnitte mit den wenigstens drei Temperaturniveaus aufweist und die Abschnitte auf den jeweiligen Temperaturniveaus wärmeträgerleitend mit Wärmenetzleitungen des Wärmenetzes verbindbar sind, wobei dem Wärmespeicher wenigstens eine Wärmepumpe der Vorrichtung zugeordnet ist, wobei zwischen der Wärmepumpe und dem Wärmespeicher wenigstens ein Wärmeträgerkreislauf ausgebildet ist. Diese Vorrichtung zeichnet sich erfindungsgemäß dadurch aus, dass der Wärmespeicher sowohl mit einem Kondensator als auch mit einem Verdampfer der Wärmepumpe wärmeträgerleitend verbunden ist, dass zu dem Verdampfer eine von dem Wärmespeicher abgehende Verdampferzuleitung führt, die wärmespeicherseitig an den Abschnitt des Wärmespeichers, der einen Arbeitsspeicher bildet, mit einem unteren Temperaturniveau angebunden ist, dass von dem Verdampfer eine Wärmeübertragerzuleitung zu einem Wärmeübertrager abgeht, dass von dem Wärmeübertrager eine Wärmeträgerleitung abgeht, die sich an einem Mischer in eine Speicherzuleitung und in eine Kondensatorzuleitung verzweigt und dass die Speicherzuleitung in den Abschnitt des Wärmespeichers für Wärmeträger auf mittlerem Temperaturniveau mündet.

Mit dieser Anordnung kann Wärmeträger aus dem Wärmespeicher dem Verdampfer und dem Kondensator zugeführt werden, wobei dem Wärmeträger einerseits im Verdampfer Wärme entzogen wird und andererseits im Kondensator zugeführt wird. Durch eine unterschiedliche Verschaltung der Komponenten Verdampfer, Kondensator und Wärmespeicher miteinander kann jetzt Wärmeträger entsprechend einem jeweiligen Betriebsmodus auf unterschiedlichen Temperaturniveaus erzeugt werden, wie sie in einem Wärmenetz benötigt werden.

Um Wärmeträger auf einem oberen oder einem mittleren Temperaturniveau des Wärmenetzes zu erzeugen, ist dem Verdampfer der Wärmepumpe in Strömungsrichtung des Wärmeträgers vorteilhafterweise ein Wärmeübertrager nachgeschaltet, wobei an den Wärmeübertrager eine Wärmequelle, insbesondere eine niedertemperierte Wärmequelle, angebunden ist. Die über die Wärmequelle in die Vorrichtung eingebrachte Wärme ermöglicht in Kombination mit der Wärmepumpe, dass der Wärmeträger auf ein höheres Temperaturniveau gebracht wird, insbesondere ein Temperaturniveau gebracht wird, das gleich oder höher als das obere Temperaturniveau des Wärmespeichers, der einen Arbeitsspeicher bildet, ist. Als Wärmequellen eignen sich unter anderem Abwässer aus Betriebsstätten oder Kläranlagen, Grundwasser, Oberflächenwasser, wie Flüsse oder Seen, oder Erdwärme, solange die Wärmequelle eine Temperatur oberhalb des Wärmeträgers im Wärmeübertrager aufweist. Dass dem Wärmeträger im Verdampfer zuvor Wärme entzogen wurde, ermöglicht dabei eine besonders große Temperaturdifferenz zu der Wärmequelle, die zu einem höheren Wärmeübergang und einer effizienteren Wärmegewinnung führt.

Nach einer Weiterbildung geht von dem Wärmeübertrager oder dem Verdampfer eine Wärmeträgerleitung ab, die sich in eine Kondensatorzuleitung und in eine Speicherzuleitung verzweigt, wobei die Speicherzuleitung in den Wärmespeicher einmündet, insbesondere in einen Abschnitt des den Arbeitsspeicher bildenden Wärmespeichers mit einem mittleren Temperaturniveau einmündet. In Abhängigkeit von einem jeweiligen Betriebsmodus kann der den Wärmeübertrager mit der zusätzlichen, von der Wärmequelle aufgenommenen Wärme verlassende Wärmeträger über die Verzweigung sowohl dem Kondensator als auch dem Wärmespeicher zugeführt werden.

Die Verzweigung ist vorteilhafterweise durch einen Mischer gebildet, um Teilströme entsprechend einem Wärmebedarf des Wärmenetzes und damit einem Wärmebedarf des Wärmespeichers steuern zu können. Ob der Wärmeträger auf Teilströme aufgeteilt wird oder vollständig der Speicherzuleitung zugeführt wird, ist wiederum abhängig von einem jeweiligen Betriebsmodus. Da der dem Kondensator zuzuführende Teilstrom des Wärmeträgers zur Erreichung hoher Temperaturen kleiner sein muss, als die dem Verdampfer zugeführte Menge Wärmeträger, kann die Kondensatorzuleitung in weiterer Ausgestaltung für eine geringere Durchflussmenge als die Speicherzuleitung ausgelegt sein.

Gemäß einer nächsten Weiterbildung geht von dem Kondensator eine Wärmeträgerleitung ab, die in den Abschnitt des Wärmespeichers mit einem oberen Temperaturniveau des Wärmespeichers, der einen Arbeitsspeicher bildet, einmündet. Der in dem Kondensator auf ein Temperaturniveau gleich oder höher des oberen Temperaturniveaus des den Arbeitsspeicher bildenden Wärmespeichers gebrachte Wärmeträger wird so in einem ersten Betriebsmodus dem Wärmespeicher zugeleitet und gleicht in dem Wärmespeicher in eine Wärmenetzleitung mit einem höheren Temperaturniveau des Wärmenetzes abfließenden Wärmeträger aus.

In weiterer Ausgestaltung kann sich die von dem Kondensator abgehende Wärmeträgerleitung auch in zwei Teilleitungen verzweigen, wobei eine erste Teilleitung in den einen Arbeitsspeicher bildenden Wärmespeicher einmündet und eine zweite Teilleitung in einen weiteren Wärmespeicher, der einen Zusatzspeicher bildet, einmündet. Neben der Einleitung von Wärmeträger in den Wärmespeicher, der einen Arbeitsspeicher bildet, ermöglicht die zusätzliche Verzweigung in die zwei Teilleitungen gemäß einem zweiten Betriebsmodus, dass Wärme aus dem Arbeitsspeicher abgeführt wird. In den Arbeitsspeicher strömt dann aus dem Wärmenetz Wärmeträger auf einem höheren Temperaturniveau, insbesondere dem oberen Temperaturniveau des den Arbeitsspeicher bildenden Wärmespeichers zu, während aus dem Wärmespeicher Wärmeträger mit dem unteren Temperaturniveau des Wärmespeichers, insbesondere Arbeitsspeichers bis zur Kapazitätsgrenze entnommen wird.

Da gemäß dem zweiten Betriebsmodus Wärmeträger aus dem Arbeitsspeicher entnommen wird und in den Zusatzspeicher strömt, muss zwischen dem Arbeitsspeicher und dem Zusatzspeicher ein Wärmeträgerausgleich erfolgen, um sicherzustellen, dass der Arbeitsspeicher mit Wärmeträger gefüllt ist. Nach einer Weiterbildung ist daher vorgesehen, dass die Wärmespeicher, insbesondere der Arbeitsspeicher und der Zusatzspeicher, mit ihren jeweiligen, ein unteres Temperaturniveau aufweisenden Abschnitten wärmeträgerleitend miteinander in Verbindung stehen.

Weiterhin kann vorgesehen sein, dass der Wärmespeicher, der einen Arbeitsspeicher bildet, an dessen Abschnitt mit dem oberen Temperaturniveau des Arbeitspeichers eine zu dem Kondensator führende Kondensatorzuleitung aufweist. Diese Kondensatorzuleitung ermöglicht gemäß dem zweiten Betriebsmodus, dass zwei voneinander getrennte Wärmeträgerkreisläufe einerseits zwischen dem Wärmespeicher oder den Wärmespeichern und dem Kondensator sowie andererseits zwischen dem Wärmespeicher, insbesondere dem Arbeitsspeicher, und dem Verdampfer gebildet sind. Der erste Betriebsmodus weist dagegen einen einzigen, sich verzweigenden Wärmeträgerkreislauf auf, wobei der Wärmeträger ausgehend von dem Wärmespeicher nacheinander über den Verdampfer und den Wärmeübertrager geleitet wird und hinter dem Wärmeübertrager in zwei Teilströme aufgeteilt wird, von denen der Eine direkt und der Andere über den Kondensator in den Wärmespeicher geleitet wird.

Um dem Wärmespeicher oder den Wärmespeichern die Abschnitte mit den unterschiedlichen Temperaturniveaus zuordnen zu können, wird der Wärmeträger entsprechend seinem jeweiligen Temperaturniveau vorteilhafterweise getrennt von Wärmeträger mit einem anderen Temperaturniveau in dem Wärmespeicher oder den Wärmespeichern gespeichert. Hierzu kann wenigstens einer der Wärmespeicher, insbesondere der Arbeitsspeicher oder der Arbeitsspeicher und der Zusatzspeicher, Strömungsberuhigungselemente aufweisen, die eine geschichtete Speicherung von Wärmeträger mit den unterschiedlichen Temperaturniveaus des Wärmenetzes ermöglichen.

In weiterer Ausgestaltung kann ein solches Strömungsberuhigungselement durch wenigstens eine gelochte Wand gebildet sein, die zwischen einerseits einem Speicherbereich mit den geschichteten Abschnitten unterschiedlicher Temperaturniveaus und andererseits wenigstens einem Beruhigungsbereich mit an den Wärmespeicher angeschlossenen Leitungen angeordnet ist. In den Wärmespeicher einströmender Wärmeträger kann sich dann in dem Beruhigungsbereich beruhigen und ohne größere Durchmischung aufgrund temperaturbedingter Dichteunterschiede konvektiv in den jeweiligen Abschnitt des Wärmespeichers mit dem entsprechenden Temperaturniveau strömen. An den Wärmespeicher angeschlossene Leitungen können dabei sowohl Wärmenetzleitungen eines Wärmenetzes als auch zur Wärmepumpe hin oder von der Wärmepumpe zurückführende Leitungen sein.

Alternativ können die Abschnitte des Wärmespeichers zur Speicherung von Wärmeträger mit den unterschiedlichen Temperaturniveaus auch unterschiedlichen, baulich voneinander getrennten Speicherbehältern zugeordnet sein. Der Wärmespeicher setzt sich dann zum Beispiel aus wenigstens einem Speicherbehälter mit Wärmeträger auf oberem Temperaturniveau des Wärmespeichers, der einen Arbeitsspeicher bildet, wenigstens einem Speicherbehälter mit Wärmeträger auf einem mittleren Temperaturniveau des Wärmespeichers, der einen Arbeitsspeicher bildet, und einem Speicherbehälter mit Wärmeträger auf einem unteren Temperaturniveau des Wärmespeichers, der einen Arbeitsspeicher bildet, zusammen. Ähnlich dem Arbeitsspeicher und den Zusatzspeicher sind vorteilhafterweise auch die baulich getrennten Speicherbehälter des Wärmespeichers wärmeträgerleitend miteinander verbunden.

Um der Vorrichtung zusätzliche Wärme zuführen zu können, ist nach einer Weiterbildung vorgesehen, dass der Wärmespeicher, der den Arbeitsspeicher bildet, mit wenigstens einer weiteren Wärmequelle verbunden ist. Diese weitere Wärmequelle kann in weiterer Ausgestaltung über einen Wärmeübertrager angeschlossen sein, wobei Wärmeträger dann zwischen dem Wärmespeicher, insbesondere dem Wärmespeicher, der den Arbeitsspeicher bildet, und dem Wärmeübertrager der weiteren Wärmequelle zirkuliert. Eine solche Wärmequelle kann darüber hinaus auch über Wärmenetzleitungen eines Wärmenetzes mit dem Arbeitsspeicher wärmeträgerleitend verbunden sein, so dass diese nicht direkt an den Wärmespeicher angeschlossen sein muss.

Weiter betrifft die Erfindung auch ein Wärmenetz, das die vorgenannte Vorrichtung aufweist oder an das die vorgenannte Vorrichtung angeschlossen ist.

Ein Ausführungsbeispiel der Erfindung, aus dem sich weitere erfindungsgemäße Merkmale ergeben können, ist in der Zeichnung dargestellt. Gleiche Teile sind dabei in allen Figuren der Zeichnung mit gleichen Bezugszeichen versehen. Es zeigen:
- Figur 1:: eine schematische Darstellung der erfindungsgemäßen Vorrichtung gemäß einem ersten Betriebsmodus; und
- Figur 2:: eine schematische Darstellung der erfindungsgemäßen Vorrichtung gemäß einem zweiten Betriebsmodus.

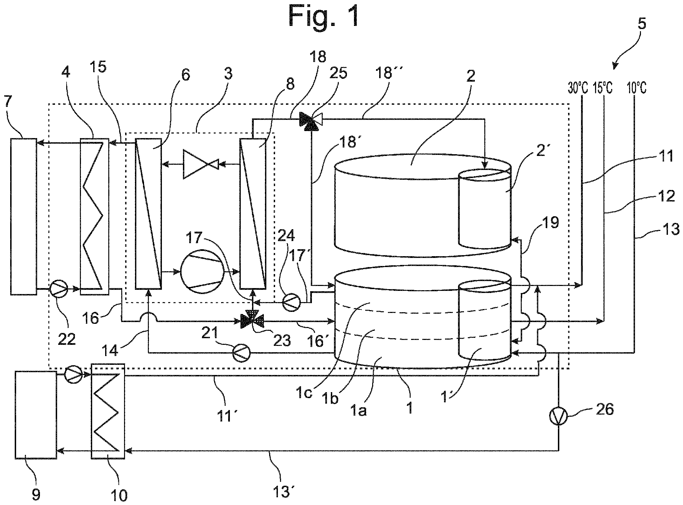

In Figur 1 ist eine erfindungsgemäße Vorrichtung mit zwei Wärmespeichern 1, 2, einer Wärmepumpe 3 und einem Wärmeübertrager 4 offenbart. Der Wärmespeicher 1 bildet einen Arbeitsspeicher, an den Wärmenetzleitungen 11, 12, 13 eines Wärmenetzes 5 wärmeträgerleitend angeschlossen sind, so dass in Abhängigkeit von einem jeweiligen Bedarf in dem Wärmenetz 5 zwischen dem Wärmenetz 5 und dem Wärmespeicher 1 Wärmeträger ausgetauscht wird, das heißt dem Wärmespeicher 1 in gleicher Menge entnommen und zugeführt wird. Der Wärmespeicher 1 ist in weiterer Ausgestaltung als Schichtspeicher ausgelegt und weist Abschnitte 1a, 1b, 1c mit unterschiedlichen Temperaturniveaus auf. Die Wärmenetzleitungen 11, 12, 13 münden in Höhe des jeweiligen Abschnitts 1a, 1b, 1c mit entsprechendem Temperaturniveau in den Wärmespeicher 1. Die Wärmenetzleitung 13 mit einem unteren Temperaturniveau des Wärmenetzes 5 ist dementsprechend an den unteren Abschnitt 1a angeschlossen. Die Wärmenetzleitung 12 mit einem mittleren Temperaturniveau ist an den zwischen Abschnitt 1a und Abschnitt 1c liegenden Abschnitt 1b angeschlossen. Die Wärmenetzleitung 11 mit einem oberen Temperaturniveau des Wärmenetzes 5 ist an den oberen Abschnitt 1c angeschlossen. Der Wärmespeicher 1 weist zudem einen Beruhigungsbereich 1' auf, über den zumindest die Wärmenetzleitungen 11, 12, 13 mit den jeweiligen Abschnitten 1a, 1b, 1c wärmeträgerleitend verbunden sind.

Weiter ist an den untersten Abschnitt 1a des Wärmespeichers 1 eine Verdampferzuleitung 14 angeschlossen, über die mittels einer Wärmeträgerpumpe 21 Wärmeträger auf dem unteren Temperaturniveau des Wärmespeichers 1, der einen Arbeitsspeicher bildet, zu einem Verdampfer 6 der Wärmepumpe 3 förderbar ist. Den Verdampfer 6 verlassender Wärmeträger gelangt über eine von dem Verdampfer 6 abgehende Wärmeübertragerzuleitung 15 zu dem Wärmeübertrager 4. An den Wärmeübertrager 4 ist eine Wärmequelle 7 angebunden, über die Wärme auf durch den Wärmeübertrager 4 strömenden Wärmeträger übertragen werden kann. Um dem Wärmeübertrager 4 Wärme der Wärmequelle 7 zuführen zu können, weist eine Wärmezuleitung zwischen dem Wärmeübertrager 4 und der Wärmequelle 7 eine Wärmequellenpumpe 22 auf.

Von dem Wärmeübertrager 4 geht eine Wärmeträgerleitung 16 ab. Diese Wärmeträgerleitung 16 verzweigt sich an einem Mischer 23 in eine Speicherzuleitung 16' und in eine Kondensatorzuleitung 17. Die Speicherzuleitung 16' mündet in den Abschnitt 1b für Wärmeträger auf mittlerem Temperaturniveau des Wärmespeichers 1. Die Kondensatorzuleitung 17 führt wärmeträgerleitend zu einem Kondensator 8 der Wärmepumpe 3. In die Kondensatorzuleitung 17 mündet zudem eine Kondensatorzuleitung 17` ein, welche den obersten Abschnitt 1c mit Wärmeträger auf dem oberen Temperaturniveau des Wärmespeichers 1, der einen Arbeitsspeicher bildet, mit dem Kondensator 8 verbindet. Zum Fördern von Wärmeträger aus dem Abschnitt 1c des Wärmespeichers 1 ist in der Kondensatorzuleitung 17' eine Wärmeträgerpumpe 24 angeordnet.

Von dem Kondensator 8 geht eine Wärmeträgerleitung 18 ab, die sich an einem Dreiwegeventil 25 in zwei Teilleitungen 18', 18" verzweigt. Eine erste Teilleitung 18' mündet in den Abschnitt 1c des Wärmespeichers 1 ein. Eine zweite Teilleitung 18" führt zu dem Wärmespeicher 2, wobei die zweite Teilleitung 18" in einem oberen Bereich des Wärmespeichers 2, insbesondere einen Bereich des Wärmespeichers 2 mit einem höchsten Temperaturniveau dieses, in diesen einmündet. Ebenso wie der Wärmespeicher 1 weist auch der Wärmespeicher 2 einen Beruhigungsbereich 2' auf, um eine in Abhängigkeit von einem jeweiligen Temperaturniveau geschichtete Speicherung von Wärmeträger in dem Wärmespeicher 2 zu erreichen. Zwischen den beiden Wärmespeichern 1, 2 ist weiter eine Verbindungsleitung 19 angeordnet, so dass die jeweils untersten Bereiche der Wärmespeicher 1, 2 wärmeträgerleitend miteinander kommunizieren können.

Weiter ist an die Wärmenetzleitung 11 und die Wärmenetzleitung 13 eine weitere Wärmequelle 9 angeschlossen. Über eine Wärmeträgerzuleitung 13' und eine Wärmeträgerpumpe 26 kann Wärmeträger auf dem unteren Temperaturniveau des Wärmenetzes zu einem Wärmeübertrager 10 geleitet werden. Über eine Wärmeträgerrückleitung 11', die in die Wärmenetzleitung 11 einmündet, kann mittels der Wärmequelle 9 in dem Wärmeübertrager 10 erwärmter Wärmeträger dann dem Wärmespeicher 1 zugeführt werden. Der Wärmequelle 9 und dem Wärmeübertrager 10 ist ebenso wie dem Wärmeübertrager 4 und der Wärmequelle 7 eine Wärmequellenpumpe 27 zugeordnet.

Gemäß einem ersten Betriebsmodus in Figur 1, bei dem Wärmeträger auf dem oberen oder mittleren Temperaturniveau des Wärmespeichers 1 in das Wärmenetz abfließt, wird jetzt Wärmeträger aus dem Wärmespeicher 1 dem Verdampfer 6 zugeführt. Im Verdampfer 6 wird dem Wärmeträger Wärme entzogen und der Wärmeträger dem Wärmeübertrager 4 zugeführt. Im Wärmeübertrager 4 wird Wärme der Wärmequelle 7 auf den Wärmeträger übertragen. Der erwärmte Wärmeträger strömt dann über die Wärmeträgerleitung 16 zum Mischer 23, wo dieser in zwei Teilströme aufgeteilt wird. Ein erster Teilstrom des Wärmeträgers strömt über die Speicherzuleitung 16' in den Abschnitt 1b des Wärmespeichers 1. Ein zweiter Teilstrom des Wärmeträgers wird dem Kondensator 8 der Wärmepumpe 3 zugeführt, wobei die zuvor im Verdampfer 6 aus dem Wärmeträger entzogene Wärme auf diesen Teilstrom des Wärmeträgers übertragen wird. Der den Kondensator 8 verlassende Wärmeträger weist ein Temperaturniveau gleich oder höher dem oberen Temperaturniveau des Wärmespeichers 1, der einen Arbeitsspeicher bildet, auf und wird in den Abschnitt 1c dieses Wärmespeichers 1 eingeleitet.

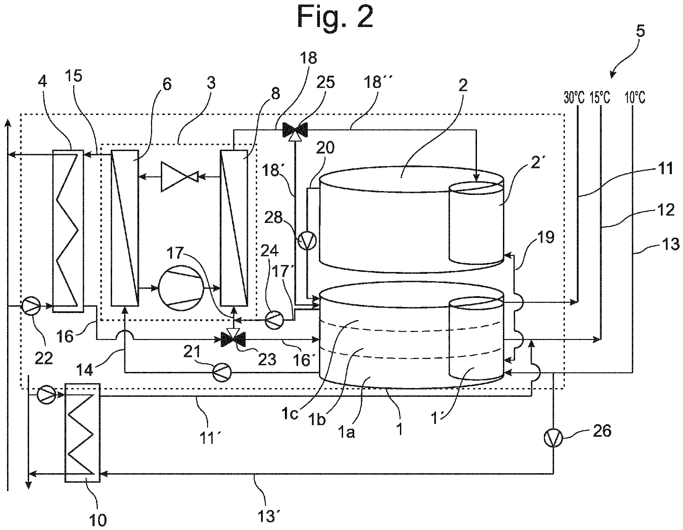

Figur 2 ist mit Figur 1 abgesehen von einer zusätzlichen Verbindungsleitung 20 zwischen den Wärmespeichern 1, 2 und einer in der Verbindungsleitung 20 angeordneten Wärmeträgerpumpe 28 übereinstimmend. In Figur 2 ist ein zweiter Betriebsmodus dargestellt, wobei zwischen den Wärmespeichern 1, 2 voneinander getrennte Wärmeträgerkreisläufe durchströmt werden. Der zweite Betriebsmodus zeigt eine Situation auf, bei der Wärmeträger auf dem unteren Temperaturniveau des Wärmespeichers 1, der einen Arbeitsspeicher bildet, in das Wärmenetz abfließt. Ein erster Wärmeträgerkreislauf führt dabei gleich dem ersten Betriebsmodus über den Verdampfer 6, den Wärmeübertrager 4 und die Speicherzuleitung 16' zurück in den Wärmespeicher 1. Entgegen Figur 1 wird jedoch keine Wärme der Wärmequelle 7 zugeführt, so dass die Wärmequelle 7 von dem Wärmeübertrager 4 abgekoppelt ist. Dies kann beispielsweise durch eine Abschaltung der Wärmequellenpumpe 22 erreicht sein. Dem Wärmeträger wird somit nur Wärme entzogen. Ein zweiter Wärmeträgerkreislauf ist zwischen den Wärmespeichern 1, 2 und dem Kondensator 8 gebildet, in dem Wärmeträger aus dem Wärmespeicher 1 über die Kondensatorzuleitung 17' und die Teilleitung 18" dem Wärmespeicher 2 zugeführt wird und Wärmeträger aus dem Wärmespeicher 2 über die Verbindungsleitung 19 in den Wärmespeicher 1 strömt. Dem Wärmespeicher 1 wird damit Wärmeträger auf dem oberen Temperaturniveau entzogen und bis zur Kapazitätsgrenze Wärmeträger auf einem kälteren Temperaturniveau, insbesondere dem unteren Temperaturniveau des den Arbeitsspeicher bildenden Wärmespeichers 1, zugeführt.

## Patentansprüche

1. Verfahren zur Bereitstellung eines Wärmeträgers mit wenigstens drei Temperaturniveaus für ein Wärmenetz (5), bei dem wenigstens ein Wärmespeicher (1) als Arbeitsspeicher wärmeträgerleitend mit Wärmenetzleitungen (11, 12, 13) des Wärmenetzes (5) verbunden ist und eine Speicherung von Wärmeträger auf den jeweiligen Temperaturniveaus des Wärmenetzes (5) ermöglicht, wobei Wärmeträger zwischen wenigstens einer Wärmepumpe (3) und wenigstens dem einen Wärmespeicher (1) zirkuliert, **dadurch gekennzeichnet,**
**dass** der Wärmeträger über einen Kondensator (8) sowie einen Verdampfer (6) der Wärmepumpe (3) geleitet wird,
**dass** dem Verdampfer (6) Wärmeträger aus dem Wärmespeicher (1), der einen Arbeitsspeicher bildet, auf einem unteren Temperaturniveau des Wärmespeichers (1) zugeleitet wird,
**dass** dem Wärmeträger im Verdampfer (6) Wärme entzogen wird,
**dass** den Verdampfer (6) verlassender Wärmeträger über eine von dem Verdampfer (6) abgehende Wärmeübertragerzuleitung (15) zu einem Wärmeübertrager (4) gelangt,
**dass** der Wärmeträger von dem Wärmeübertrager (4) über eine Wärmeträgerleitung (16) zu einem Mischer (23) gelangt, von dem der Wärmeträger in eine Speicherzuleitung (16`) oder in eine Kondensatorzuleitung (17) oder in die Speicherzuleitung (16`) und in die Kondensatorzuleitung (17) gelangt,
**dass** der Wärmeträger aus der Speicherzuleitung (16') einem Abschnitt (1b) des Wärmespeichers (1) für Wärmeträger auf mittlerem Temperaturniveau zugeführt wird und
**dass** dem Wärmeträger im Kondensator (8) die Wärme zugeführt wird, die dem Wärmeträger im Verdampfer (6) entzogen wurde, wobei den Kondensator (8) verlassender Wärmeträger eine Temperatur aufweist, die gleich oder höher als ein oberes Temperaturniveau im Wärmespeicher (1), der einen Arbeitsspeicher bildet, ist.

2. Verfahren nach Anspruch 1, wobei in dem Wärmeübertrager (4) in Abhängigkeit von einem jeweiligen Betriebsmodus Wärme einer Wärmequelle (7), insbesondere einer niedertemperierten Wärmequelle (7), auf den Wärmeträger übertragen wird.

3. Verfahren nach Anspruch 2, **dadurch gekennzeichnet, dass** der den Wärmeübertrager (4) verlassende Wärmeträger gemäß einem ersten Betriebsmodus in zwei Teilströme aufgeteilt wird, von denen ein erster Teilstrom direkt in den Wärmespeicher (1) eingeleitet wird und ein zweiter Teilstrom dem Kondensator (8) zugeführt wird.

4. Verfahren nach Anspruch 3, **dadurch gekennzeichnet, dass** der den Kondensator (8) verlassende Wärmeträger dem Wärmespeicher (1), der den Arbeitsspeicher bildet, auf dem oberen Temperaturniveau des Wärmespeichers (1), insbesondere des Arbeitsspeichers, zugeleitet wird.

5. Verfahren nach einem der Ansprüche 1 oder 2, **dadurch gekennzeichnet, dass** den Wärmeübertrager (4) verlassender Wärmeträger gemäß einem zweiten Betriebsmodus dem Wärmespeicher (1), der einen Arbeitsspeicher bildet, vollständig zugeführt wird, während Wärmeträger auf dem oberen Temperaturniveau des Wärmespeichers (1), der einen Arbeitsspeicher bildet, aus dem Wärmespeicher (1), insbesondere aus dem Arbeitsspeicher, entnommen und dem Kondensator (8) zugeleitet wird.

6. Verfahren nach Anspruch 5, **dadurch gekennzeichnet, dass** der den Kondensator (8) verlassende Wärmeträger einem weiteren Wärmespeicher (2), der einen Zusatzspeicher bildet, zugeleitet wird.

7. Vorrichtung zur Bereitstellung von Wärmeträger auf wenigstens drei Temperaturniveaus für ein Wärmenetz (5) aufweisend wenigstens einen Wärmespeicher (1, 2), wobei wenigstens ein Wärmespeicher (1) als Arbeitsspeicher Abschnitte (1a, 1b, 1c) mit den wenigstens drei Temperaturniveaus aufweist und die Abschnitte (1a, 1b, 1c) auf den jeweiligen Temperaturniveaus wärmeträgerleitend mit Wärmenetzleitungen (11, 12, 13) des Wärmenetzes (5) verbindbar sind, wobei dem Wärmespeicher (1, 2) wenigstens eine Wärmepumpe (3) der Vorrichtung zugeordnet ist, wobei zwischen der Wärmepumpe (3) und dem Wärmespeicher (1, 2) wenigstens ein Wärmeträgerkreislauf ausgebildet ist,
**dadurch gekennzeichnet,**
**dass** der Wärmespeicher (1) sowohl mit einem Kondensator (8) als auch mit einem Verdampfer (6) der Wärmepumpe (3) wärmeträgerleitend verbunden ist, dass zu dem Verdampfer (6) eine von dem Wärmespeicher (1, 2) abgehende Verdampferzuleitung (14) führt, die wärmespeicherseitig an den Abschnitt (1a) des Wärmespeichers (1), der einen Arbeitsspeicher bildet, mit einem unteren Temperaturniveau angebunden ist,
**dass** von dem Verdampfer (6) eine Wärmeübertragerzuleitung (15) zu einem Wärmeübertrager (4) abgeht,
**dass** von dem Wärmeübertrager (4) eine Wärmeträgerleitung (16) abgeht, die sich an einem Mischer (23) in eine Speicherzuleitung (16`) und in eine Kondensatorzuleitung (17) verzweigt, und
**dass** die Speicherzuleitung (16') in den Abschnitt (1b) des Wärmespeichers (1) für Wärmeträger auf mittlerem Temperaturniveau mündet.

8. Vorrichtung nach Anspruch 7, wobei an den Wärmeübertrager (4) eine Wärmequelle (7), insbesondere eine niedertemperierte Wärmequelle (7), angebunden ist.

9. Vorrichtung nach Ansprüche 7 oder 8, **dadurch gekennzeichnet, dass** sich die von dem Kondensator (8) abgehende Wärmeträgerleitung (18) in zwei Teilleitungen (18', 18") verzweigt, wobei eine erste Teilleitung (18`) in den einen Arbeitsspeicher bildenden Wärmespeicher (1) einmündet und eine zweite Teilleitung (18") in einen weiteren Wärmespeicher (2), der einen Zusatzspeicher bildet, einmündet.

10. Vorrichtung nach einem der Ansprüche 7 bis 9, **dadurch gekennzeichnet, dass** die Wärmespeicher (1, 2), insbesondere der Arbeitsspeicher und der Zusatzspeicher, mit ihren jeweiligen, ein unteres Temperaturniveau aufweisenden Abschnitten (1a) wärmeträgerleitend miteinander in Verbindung stehen.

11. Vorrichtung nach einem der Ansprüche 7 bis 10, **dadurch gekennzeichnet, dass** der Wärmespeicher (1), der einen Arbeitsspeicher bildet, an dessen Abschnitt (1c) mit dem oberen Temperaturniveau eine zu dem Kondensator (8) führende Kondensatorzuleitung (17') aufweist.

12. Vorrichtung nach einem der Ansprüche 7 bis 11, **dadurch gekennzeichnet, dass** wenigstens einer der Wärmespeicher (1, 2), insbesondere der Arbeitsspeicher oder der Arbeitsspeicher und der Zusatzspeicher, Strömungsberuhigungselemente aufweist, die eine geschichtete Speicherung von Wärmeträger mit den unterschiedlichen Temperaturniveaus des Wärmenetzes (5) ermöglichen.

13. Wärmenetz (5),
**dadurch gekennzeichnet,**
**dass** es eine Vorrichtung zur Bereitstellung von Wärmeträger nach einem der Ansprüche 7 bis 12 aufweist.

## Claims

1. Method for providing a heat carrier with at least three temperature levels for a heating network (5), in which at least one heat storage (1) is connected in a heat-carrier-conductive manner to heating network lines (11, 12, 13) of the heating network (5) as a working storage and enables a heat carrier to be stored at the respective temperature levels of the heating network (5), wherein a heat carrier circulates between at least one heat pump (3) and at least the one heat storage (1),
**characterized in that**
the heat carrier is directed through a condenser (8) and an evaporator (6) of the heat pump (3),
the heat carrier from the heat storage (1), which forms a working storage, is supplied to the evaporator (6) at a lower temperature level of the heat storage (1),
heat is extracted from the heat carrier in the evaporator (6),
the heat carrier leaving the evaporator (6) reaches a heat exchanger (4) via a heat-exchanger supply line (15) outbound from the evaporator (6),
the heat carrier from the heat exchanger (4) reaches a mixer (23) via a heat carrier line (16), from which mixer (23) the heat carrier enters a storage supply line (16') or a condenser supply line (17) or the storage supply line (16') and the condenser supply line (17),
the heat carrier from the storage supply line (16') is supplied to a section (1b) of the heat storage (1) for heat carrier at a medium temperature level, and
the heat extracted from the heat carrier in the evaporator (6) is supplied to the heat carrier in the condenser (8), wherein the heat carrier leaving the condenser (8) has a temperature equal to or higher than an upper temperature level in the heat storage (1), which forms a working storage.

2. The method according to Claim 1,
wherein, in the heat exchanger (4), heat from a heat source (7), in particular, a low-temperature heat source (7), is transferred to the heat carrier depending on a particular operating mode.

3. The method according to Claim 2, **characterized in that** the heat carrier leaving the heat exchanger (4) is divided into two partial streams according to a first operating mode, from which partial streams a first partial stream is fed directly into the heat storage (1) and a second partial stream is supplied to the condenser (8).

4. The method according to Claim 3, **characterized in that** the heat carrier leaving the condenser (8) is supplied to the heat storage (1), which forms the working storage, at the upper temperature level of the heat storage (1), in particular of the working storage.

5. The method according to any one of the Claims 1 or 2, **characterized in that** the heat carrier leaving the heat exchanger (4) is completely supplied to the heat storage (1), which forms a working storage, in accordance with a second mode of operation, while the heat carrier at the upper temperature level of the heat storage (1), which forms a working storage, is taken from the heat storage (1), in particular, from the working storage, and fed to the condenser (8).

6. The method according to Claim 5, **characterized in that** the heat carrier leaving the condenser (8) is fed to another heat storage (2), which forms an additional storage.

7. Device for the provision of a heat carrier with at least three temperature levels for a heating network (5) comprising at least one heat storage (1, 2), wherein at least one heat storage (1) comprises sections (1a, 1b, 1c) with the at least three temperature levels, and the sections (1a, 1b, 1c) can be connected in a heat-carrier-conductive manner to heating network lines (11, 12, 13) of the heating network (5) at the respective temperature levels, wherein at least one heat pump (3) of the device is assigned to the heat storage (1, 2), wherein at least one heat-carrier circulation system is formed between the heat pump (3) and the heat storage (1, 2), **characterized in that**
the heat storage (1) is connected to both a condenser (8) as well as an evaporator (6) of the heat pump (3) in a heat-carrier-conductive manner, that an evaporator supply line (14) outbound from the heat storage (1, 2) leads to the evaporator (6), which is connected to the section (1a) of the heat storage (1), which forms a working storage, on the heat storage side with a lower temperature level,
a heat-exchanger supply line (15) leads from the evaporator (6) to a heat exchanger (4),
a heat-carrier line (16) runs from the heat exchanger (4), which branches off at a mixer (23) into a storage supply line (16') and into a condenser supply line (17), and
the storage supply line (16') flows into the section (1b) of the heat storage (1) for heat carrier at a medium temperature level.

8. The device according to Claim 7,
wherein a heat source (7), in particular, a low-temperature heat source (7), is connected to the heat exchanger (4).

9. The device according to Claims 7 or 8,
**characterized in that** the heat carrier line (18) outbound from the condenser (8) branches into two sublines (18', 18"), wherein a first sub-line (18') flows into the heat storage (1) forming a working storage and a second sub-line (18") flows into another heat storage (2), which forms an additional storage.

10. The device according to any one of the Claims 7 to 9, **characterized in that** the heat storages (1, 2), in particular, the working storage and the additional storage, are connected to each other in a heat-carrier-conductive manner with their respective sections (1a) having a lower temperature level.

11. The device according to any one of the Claims 7 to 10, **characterized in that** the heat storage (1), which forms a working storage, comprises a condenser supply line (17') leading to the condenser (8) at the upper temperature level at its section (1c).

12. The device according to any one of the Claims 7 to 11, **characterized in that** at least one of the heat storages (1, 2), in particular, the working storage or the working storage and the additional storage, comprises flow-abatement elements enabling a stratified storage of a heat carrier at the different temperature levels of the heat network (5).

13. Heating network (5), **characterized in that** it comprises a device for providing a heat carrier according to any one of the Claims 7 to 12.

## Revendications

1. Procédé, destiné à mettre à disposition un agent caloporteur à au moins trois niveaux de température pour un réseau de chauffage (5), lors duquel au moins un accumulateur de chaleur (1) en fonction d'accumulateur de travail est relié de manière conductrice d'agent caloporteur avec des conduites (11, 12, 13) de réseau de chauffage du réseau de chauffage (5) et permet une accumulation de l'agent caloporteur au niveau de température respectif du réseau de chauffage (5), de l'agent caloporteur circulant entre au moins une pompe à chaleur (3) et au moins l'un accumulateur de chaleur (1),
**caractérisé**
**en ce que** l'agent caloporteur est dirigé par l'intermédiaire d'un condensateur (8) ainsi que d'un évaporateur (6) de la pompe à chaleur (3),
**en ce que** vers l'évaporateur (6) est amené de l'agent caloporteur issu de l'accumulateur de chaleur (1) qui constitue un accumulateur de travail à un niveau de température inférieur de l'accumulateur de chaleur (1),
**en ce que** dans l'évaporateur (6), de la chaleur est soutirée de l'agent caloporteur,
**en ce que** de l'agent caloporteur quittant l'évaporateur (6) arrive par l'intermédiaire d'une conduite d'alimentation (15) d'échangeur thermique partant de l'évaporateur (6) vers un échangeur thermique (4),
**en ce que** l'agent caloporteur arrive de l'échangeur thermique (4) par l'intermédiaire d'une conduite (16) d'agent caloporteur vers un mélangeur (23), à partir duquel l'agent caloporteur arrive dans une conduite d'alimentation (16') de l'accumulateur ou dans une conduite d'alimentation (17) du condensateur ou dans la conduite d'alimentation (16') de l'accumulateur et dans la conduite d'alimentation (17) du condensateur, en ce qu'à partir de la conduite d'alimentation (16') de l'accumulateur, l'agent caloporteur est alimenté vers un tronçon (1b) de l'accumulateur de chaleur (1) pour de l'agent caloporteur à niveau de température moyen et
**en ce que** dans le condensateur (8), la chaleur qui a été soutirée à l'agent caloporteur dans l'évaporateur (6) est alimentée vers l'agent caloporteur, de l'agent caloporteur quittant le condensateur (8) présentant une température qui est supérieure ou égale à un niveau de température supérieur dans l'accumulateur de chaleur (1) qui constitue un accumulateur de travail.

2. Procédé selon la revendication 1, en fonction d'un mode de fonctionnement respectif, de la chaleur d'une source de chaleur (7), notamment d'une source de chaleur (7) tempérée à basse température étant transmise à l'agent caloporteur dans l'échangeur thermique (4).

3. Procédé selon la revendication 2, **caractérisé en ce que** selon un premier mode de fonctionnement, l'agent caloporteur quittant l'échangeur thermique (4) est divisé en deux flux partiels, dont un premier flux partiel est introduit directement dans l'accumulateur de chaleur (1) et un deuxième flux partiel est alimenté vers le condensateur (8).

4. Procédé selon la revendication 3, **caractérisé en ce que** l'agent caloporteur quittant le condensateur (8) est dirigé vers l'accumulateur de chaleur (1) qui constitue l'accumulateur de travail au niveau de température supérieur de l'accumulateur de chaleur (1), notamment de l'accumulateur de travail.

5. Procédé selon l'une quelconque des revendications 1 ou 2, **caractérisé en ce que** selon un deuxième mode de fonctionnement, de l'agent caloporteur quittant l'échangeur thermique (4) est entièrement alimenté vers l'accumulateur de chaleur (1) qui constitue un accumulateur de travail, alors que de l'agent caloporteur au niveau de température supérieur de l'accumulateur de chaleur (1) qui constitue un accumulateur de travail est prélevé à partir de l'accumulateur de chaleur (1), notamment à partir de l'accumulateur de travail, et dirigé vers le condensateur (8).

6. Procédé selon la revendication 5, **caractérisé en ce que** l'agent caloporteur quittant le condensateur (8) est dirigé vers un accumulateur de chaleur (2) additionnel, qui constitue un accumulateur auxiliaire.

7. Dispositif, destiné à mettre à disposition de l'agent caloporteur présentant au moins trois niveaux de température pour un réseau de chauffage (5), comportant au moins un accumulateur de chaleur (1, 2), au moins un accumulateur de chaleur (1) faisant fonction d'accumulateur de travail comportant des tronçons (1a, 1b, 1c) présentant les trois niveaux de température et les tronçons (1a, 1b, 1c) aux niveaux de température respectifs étant reliés de manière conductrice d'agent caloporteur avec des conduites (11, 12, 13) de réseau de chauffage du réseau de chauffage (5), à l'accumulateur de chaleur (1, 2) étant affectée au moins une pompe à chaleur (3) du dispositif, entre la pompe à chaleur (3) et l'accumulateur de chaleur (1, 2) étant constitué au moins un circuit d'agent caloporteur,
**caractérisé**
**en ce que** l'accumulateur de chaleur (1) est relié de manière conductrice d'agent caloporteur, aussi bien avec un condensateur (8) qu'également avec un évaporateur (6) de la pompe à chaleur (3),
**en ce que** vers l'évaporateur (6) mène une conduite d'alimentation (14) de l'évaporateur partant de l'accumulateur de chaleur (1, 2), qui du côté de l'accumulateur de chaleur est rattachée sur le tronçon (1a) de l'accumulateur de chaleur (1) qui constitue un accumulateur de travail avec un niveau de température inférieur,
**en ce que** de l'évaporateur (6), une conduite d'alimentation (15) d'échangeur thermique part vers un échangeur thermique (4),
**en ce que** de l'échangeur thermique (4) part une conduite (16) d'agent caloporteur qui sur un mélangeur (23) se ramifie en une conduite d'alimentation (16') de l'accumulateur et en une conduite d'alimentation (17) du condensateur et
**en ce que** la conduite d'alimentation (16') de l'accumulateur débouche dans le tronçon (1b) de l'accumulateur de chaleur (1) pour de l'agent caloporteur à niveau de température moyen.

8. Dispositif selon la revendication 7, à l'échangeur thermique (4) étant rattachée une source de chaleur (7), notamment une source de chaleur (7) tempérée à basse température.

9. Dispositif selon les revendications 7 ou 8, **caractérisé en ce que** la conduite (18) d'agent caloporteur partant du condensateur (8) se ramifie en deux conduites partielles (18', 18"), une première conduite partielle (18') débouchant dans l'un accumulateur de chaleur (1) constituant l'accumulateur de travail et la deuxième conduite partielle (18") débouchant dans un accumulateur de chaleur (2) additionnel, qui constitue un accumulateur auxiliaire.

10. Dispositif selon l'une quelconque des revendications 7 à 9, **caractérisé en ce que**, par leurs tronçons (1a) respectifs présentant un niveau de température inférieur, les accumulateurs de chaleur (1, 2), notamment l'accumulateur de travail et l'accumulateur auxiliaire sont en liaison mutuelle, notamment de manière conductrice d'agent caloporteur.

11. Dispositif selon l'une quelconque des revendications 7 à 10, **caractérisé en ce que** sur son tronçon (1c) présentant le niveau de température supérieur, l'accumulateur de chaleur (1), qui constitue un accumulateur de travail comporte une conduite d'alimentation (17') du condensateur menant vers le condensateur (8).

12. Dispositif selon l'une quelconque des revendications 7 à 11, **caractérisé en ce qu'**au moins l'un des accumulateurs de chaleur (1, 2), notamment l'accumulateur de travail ou l'accumulateur de travail et l'accumulateur auxiliaire comporte des éléments stabilisateurs d'écoulement, qui permettent une accumulation en couches d'agents caloporteurs présentant les différents niveaux de température du réseau de chauffage (5).

13. Réseau de chauffage (5),
**caractérisé**
**en ce qu'**il comporte un dispositif destiné à mettre à disposition de l'agent caloporteur selon l'une quelconque des revendications 7 à 12.
